# EUROPÄISCHE PATENTSCHRIFT

(11) **EP 4 389 469 B1**
(45) Veröffentlichungstag und Bekanntmachung des Hinweises auf die Patenterteilung: **30.07.2025**
(21) Anmeldenummer: 23214865.0
(22) Anmeldetag: 07.12.2023
(51) Int. Cl.: B60C 23/04

(54) **VERFAHREN ZUM ZUORDNEN VON REIFENDRUCKÜBERWACHUNGSEINHEITEN EINES REIFENDRUCKÜBERWACHUNGSSYSTEMS EINES FAHRZEUGS ZU DEN POSITIONEN DER RÄDER AN DEM FAHRZEUG**
METHOD FOR ASSOCIATING TYRE PRESSURE MONITORING UNITS OF A TYRE PRESSURE MONITORING SYSTEM OF A VEHICLE WITH THE POSITIONS OF THE WHEELS ON THE VEHICLE
PROCÉDÉ D'ATTRIBUTION D'UNITÉS DE SURVEILLANCE DE PRESSION DE PNEU D'UN SYSTÈME DE SURVEILLANCE DE PRESSION DE PNEU D'UN VÉHICULE AUX POSITIONS DES ROUES DU VÉHICULE

(30) Priorität: 21.12.2022 DE 102022134318; 05.01.2023 DE 102023100231
(43) Veröffentlichungstag der Anmeldung: 26.06.2024
(73) Patentinhaber: Huf Baolong Electronics Bretten GmbH, 75015 Bretten (DE)
(72) Erfinder: Kessler, Ralf, 76327 Pfinztal (DE); Vögeli, Patrick, 76356 Weingarten (DE); Wagner, Markus, 75038 Flehingen (DE)
(74) Vertreter: Twelmeier Mommer & Partner

(56) Entgegenhaltungen:
- EP-A2- 1 702 769
- US-A1- 2010 191 409
- US-A1- 2022 230 481

## Beschreibung

Die Erfindung betrifft ein Verfahren zum Zuordnen von Reifendrucküberwachungseinheiten eines Reifendrucküberwachungssystems eines Fahrzeugs zu den Positionen der Räder an dem Fahrzeug.

Reifendrucküberwachungssysteme bestehen im Allgemeinen aus an den Rädern des Fahrzeugs montierten Reifendrucküberwachungseinheiten und einer Zentraleinheit. Die Reifendrucküberwachungssysteme enthalten jeweils einen Drucksensor, in der Regel auch Temperatur- und Beschleunigungssensoren, sowie einen Sender, mit dem die Reifendrucküberwachungseinheit Daten drahtlos an die Zentraleinheit überträgt. Jede Reifendrucküberwachungseinheit hat dabei eine charakteristische Kennung, die üblicher Weise als Ziffernfolge in jeder Datenübertragung enthalten ist, und es der Zentraleinheit ermöglicht, diese Reifendrucküberwachungseinheit von anderen Reifendrucküberwachungseinheiten zu unterscheiden.

Die Zentraleinheit des Reifendrucküberwachungssystems wertet die von den Reifendrucküberwachungseinheiten übertragenen Signale aus und zeigt dem Fahrer Anomalien des Reifendrucks an, wozu die Zentraleinheit im Allgemeinen mit einer im Armaturenbrett des Fahrzeugs vorgesehenen Anzeigeeinrichtung verbunden ist. Die Verbindungen zwischen der Zentraleinheit und der Anzeigeeinrichtung und gegebenenfalls zu einem Empfänger erfolgen üblicherweise über Kabel, z.B. über ein im Fahrzeug vorgesehenes BUS-System.

Damit die Zentraleinheit anzeigen kann, an welchem Rad eine Anomalie des Reifendrucks auftritt, muss sie wissen, an welchem Rad sich eine Reifendrucküberwachungseinrichtung befindet, welche die Anomalie des Reifendrucks signalisiert. Bei älteren Reifendrucküberwachungssystem war es erforderlich, dass durch eine Eingabe eines Benutzers nach jedem Reifenwechsel die charakteristischen Kennungen und Radpositionen der entsprechenden Reifendrucküberwachungseinheiten der Zentraleinheit mitgeteilt werden mussten. Moderne Reifendrucküberwachungssysteme können die Zuordnung von Kennungen zu den verschiedenen Radpositionen eines Fahrzeugs selbsttätig vornehmen, was in der Literatur oft als Autolokation bezeichnet wird. Dazu sind verschiedene Verfahren bekannt, beispielsweise aus US 8 600 607 B2, US 10 442 255 B2, US9902216 B2, US2022/230481 A1, US2010/191409 A1 und EP1702769 A2.

Ständiges Ziel bei der Entwicklung von Verfahren zur Autolokation, also Verfahren zum Zuordnen von Reifendrucküberwachungseinheiten eines Reifendrucküberwachungssystems eines Fahrzeugs zu den verschiedenen Positionen, an denen jeweils ein Rad an dem Fahrzeug montiert ist, ist es, dass eine solche Zuordnung möglichst schnell und zuverlässig vorgenommen wird.

Aufgabe der vorliegenden Erfindung ist es, einen Weg aufzuzeigen, wie Reifendrucküberwachungseinheiten schneller zuverlässig zu den verschiedenen Radpositionen zugeordnet werden können.

Diese Aufgabe wird durch ein Verfahren mit den im Oberbegriff des Anspruchs 1 angegebenen Merkmalen gelöst. Vorteilhafte Weiterbildungen der Erfindung sind Gegenstand von Unteransprüchen.

Während der Fahrt sind die verschiedenen Räder eines Fahrzeugs unterschiedlichen Belastungen ausgesetzt. Beispielsweise legen bei einer Kurvenfahrt Räder an der Innenseite der Kurve einen kürzeren Weg zurück als Räder an der Außenseite einer Kurve. Zudem hängt die Wegstrecke, die ein Rad zurücklegt, auch von seinem Durchmesser ab, der sich wegen abweichendem Reifendruck oder einer ungleichen Lastverteilung des Fahrzeugs von den Durchmessern anderer Räder unterscheiden kann. Ein weiterer Unterschied ist beispielsweise, dass angetriebene Räder im Vergleich zu nicht-angetriebenen Rädern stärker beschleunigt werden.

Aufgrund von solchen Unterschieden kann eine Zentraleinheit durch Auswertung von Messergebnissen von Beschleunigungssensoren der zugehörigen Reifendrucküberwachungseinrichtungen ermitteln, an welchen Radposition die verschiedenen Reifendrucküberwachungseinheiten montiert sind, und somit eine Zuordnung vornehmen.

Bei einem erfindungsgemäßen Verfahren gibt die Zentraleinheit vor, zu welchen Zeiten die Reifendrucküberwachungseinheiten mit ihren Beschleunigungssensoren Messungen vornehmen sollen und kommuniziert zu diesem Zweck mittels Bluetooth mit den einzelnen Reifendrucküberwachungseinheiten. Wenn Fahrzustände auftreten, in denen die verschiedenen Räder eines Fahrzeugs unterschiedlichen Belastungen ausgesetzt sind, kann die Zentraleinheit die Reifendrucküberwachungseinheiten auffordern, Messungen vorzunehmen und dann anhand der Messergebnisse sehr rasch eine zuverlässige Zuordnung vornehmen.

Beispielsweise kann die Zentraleinheit veranlassen, dass während einer Kurvenfahrt von den Beschleunigungssensoren der Reifendrucküberwachungseinheiten Messungen vorgenommen werden. Die Signale der Beschleunigungssensoren einer Reifendrucküberwachungseinheit haben typischer Weise einen sinusförmigen Verlauf, so dass die Anzahl der Perioden der Anzahl der Radumdrehungen entspricht. Über eine längere Fahrtzeit treten in der Regel ebenso viele Linkskurven wie Rechtskurven auf, so dass auf lange Sicht die Anzahl der Radumdrehungen von linken und rechten Rädern überstimmt. Bei einer Kurvenfahrt unterscheidet sich die Anzahl Radumdrehungen von Rädern auf der Innenseite der Kurve aber deutlich von Anzahl von Radumdrehungen von Rädern auf der Außenseite der Kurve. Indem gezielt Messungen während einer Kurvenfahrt vorgenommen werden, lässt sich durch eine Auswertung somit sehr schnell herausfinden, welchen Reifendrucküberwachungseinheiten an Rädern auf der Innenseite der Kurve und welche an Rädern auf der Außenseite der Kurve montiert sind. Wenn die Zentraleinheit also weiß, wann ein Linkskurve bzw. eine Rechtskurve gefahren wird und dann während der Kurvenfahrt Messungen veranlasst, können sehr schnell linke von rechten Rädern unterschieden werden.

Durch Auswertung von Messungen von Beschleunigungssensoren der Reifendrucküberwachungseinheiten während einer Kurvenfahrt lassen sich zusätzlich auch gelenkte von ungelenkten Rädern, also Vorder- von Hinterrädern, unterscheiden, da gelenkte Räder einen kürzeren Weg zurücklegen als ungelenkte Räder, also während der Kurvenfahrt weniger Radumdrehungen erfahren.

Eine andere Möglichkeit zur Unterscheidung von Vorder- und Hinterrädern besteht darin, die Reifendrucküberwachungseinrichtungen zu Messungen zu veranlassen, während das Fahrzeug beschleunigt wird, insbesondere die Beschleunigung eine vorgegebenen Schwellenwert übersteigt. Angetriebene Räder bzw. Räder an einer angetriebenen Achse erfahren in einer solchen Situation nämlich eine größere Beschleunigung als nicht-angetriebene Räder.

Die Zentraleinheit kann beispielsweise von einem Motorsteuergerät des Fahrzeugs über Fahrzustände, etwa Kurvenfahrten, Beschleunigungs- oder Bremsvorgänge, informiert werden, in denen unterschiedliche Belastungen der verschiedenen Räder zu erwarten sind und deshalb durch Auswertung von Messungen der Beschleunigungssensoren der Reifendrucküberwachungseinheiten besonders rasch eine Zuordnung zu den Radpositionen möglich ist.

Sobald die Zentraleinheit die Zeiten kennt, zu denen durch besondere Fahrzustände eine ungleiche Belastung der verschiedenen Fahrzeugräder zu erwarten ist, kann die Zentraleinheit die entsprechenden Zeiten an einige oder alle Reifendrucküberwachungseinheiten des Fahrzeugs übermitteln und Messergebnisse für diese Zeiten anfordern. Für die Kommunikation zwischen Zentraleinheit wird dabei der Industriestandard Bluetooth verwendet, bevorzugt Bluetooth Low Energy.

Vorstehend wurden Beispiele beschrieben bei denen die Zentraleinheit die Zeiten, zu denen die Reifendrucküberwachungseinheiten Messungen mit ihrem wenigstens einen Beschleunigungssensor vornehmen sollen, in Abhängigkeit von Fahrzuständen des Fahrzeugs auswählt. Ein erfindungsgemäßes Verfahren kann aber auch durchgeführt werden, wenn keine besonderen Fahrzustände auftreten, die zu unterschiedlichen Belastungen der verschiedenen Fahrzeugräder führen. Beispielsweis kann die Zentraleinheit ein Zeitintervall definieren und mehreren oder allen Reifendrucküberwachungseinheiten des Fahrzeugs Anfang und Ende dieses Zeitintervalls mitteilen und die Reifendrucküberwachungseinheiten anweisen, während dieses Zeitintervalls Messungen vorzunehmen, aus denen sich die Anzahl der Radumdrehungen in diesem Zeitintervall ermitteln lässt. Die Anzahl der Radumdrehungen kann dabei von der Reifendrucküberwachungseinheit selbst durch Auswertung des Messergebnisse ihres Beschleunigungssensors bzw. ihrer Beschleunigungssensoren durchgeführt werden oder von der Zentraleinheit vorgenommen werden. Im ersten Fall senden die Reifendrucküberwachungseinheiten an die Zentraleinheit direkt die Anzahl der in dem vorgegebenen Zeitintervall detektierten Radumdrehungen, im zweiten Fall ermittelt die Zentraleinheit aus empfangenen Messungen von Beschleunigungssensoren, wie viele Radumdrehungen das Rad der betreffenden Reifendrucküberwachungseinheit in diesem Zeitintervall erfahren hat.

Wie oft sich ein Rad in einem vorgegeben Zeitintervall gedreht hat, kann die Zentraleinheit zusätzlich auch von ABS-Sensoren des Fahrzeugs erfahren bzw. durch Auswertung von Signalen von ABS-Sensoren ermitteln. Da die einzelnen ABS-Sensoren jeweils einem der Räder des Fahrzeugs zugeordnet sind, kann durch Vergleich der Anzahl von Radumdrehungen, die für ein Zeitintervall anhand von Messungen der Reifendrucküberwachungseinheiten ermittelt wurden, und der Anzahl von Radumdrehungen, die mittels ABS-Sensoren für das Zeitintervall ermittelt wurden, bei Übereinstimmung eine Zuordnung einer Reifendrucküberwachungseinheit zu einer Radposition vorgenommen werden.

Wegen einer Reihe von Gründen ist davon auszugehen, dass sich die Anzahl der Radumdrehungen der verschiedenen Fahrzeugräder in einem Zeitintervall unterscheidet, relevant sind insbesondere unterschiedliche Raddurchmesser wegen unterschiedlichem Verschleiß, Reifendruck oder ungleicher Lastverteilung.

Über ein längeres Zeitintervall, in dem sich die Fahrzeugräder einige hundert- oder tausendmal drehen, ergeben sich deshalb im Regelfall für jedes Fahrzeugrad unterschiedlich viele Radumdrehungen. Wenn die von Daten einer Reifendrucküberwachungseinheit ermittelte Anzahl von Radumdrehungen mit der mittels ABS-Sensor ermittelten Anzahl von Radumdrehungen überstimmt, kann die betreffende Reifendrucküberwachungseinheit somit der Radposition des ABS-Sensors zugeordnet werden.

Eine vorteilhafte Weiterbildung der Erfindung sieht dabei vor, dass die Zentraleinheit nicht nur Zeiten vorgibt, für die Messergebenisse von Beschleunigungssensoren der Reifendrucküberwachungseinheiten benötigt werden, sondern auch für die verschiedenen Reifendrucküberwachungseinheiten unterschiedliche Zeitpunkte vorgibt, zu denen entsprechende Daten gesendet werden sollen. Beispielsweise können den einzelnen Reifendrucküberwachungseinheiten unterschiedliche Zeitverzögerungen vorgegeben werden, mit denen Ergebnisse nach Abschluss der Messungen gesendet werden sollen. Auf diese Weise lässt sich vermeiden, dass der Sendungen verschiedener Reifendrucküberwachungseinheiten zugleich ankommen, was deren Empfang erschweren würde.

Da bei einem erfindungsgemäßen Verfahren die Zentraleinheit von den einzelnen Reifendrucküberwachungseinheiten gezielt Messungen von Beschleunigungssensoren veranlasst und Messergebnisse anfordert, können die Anforderungen auf jene Reifendrucküberwachungseinheiten beschränkt werden, die noch nicht eindeutig einer Radposition zugeordnet wurden.

## Patentansprüche

1. Verfahren zum Zuordnen von Reifendrucküberwachungseinheiten eines Reifendrucküberwachungssystems eines Fahrzeugs zu den verschiedenen Positionen, an denen jeweils ein Rad an dem Fahrzeug montiert ist, wobei die Reifendrucküberwachungseinheiten jeweils einen Drucksensor, wenigstens einen Beschleunigungssensor und einen Sender enthalten,
der Sender im Betrieb aus Messungen des Drucksensors und des wenigstens einen Beschleunigungssensors gewonnene Daten zusammen mit einer charakteristischen Kennung der Reifendrucküberwachungseinheit aussendet,
das Reifendrucküberwachungssystem eine Zentraleinheit enthält, die Sendungen der Reifendrucküberwachungseinheiten empfängt und durch Auswertung der darin enthaltenen Daten die charakteristischen Kennungen der verschiedenen Reifendrucküberwachungseinheiten jeweils einer der Positionen zuordnet, an denen jeweils ein Rad an dem Fahrzeug montiert ist,
**dadurch gekennzeichnet, dass**
die Zentraleinheit über Bluetooth mit den Reifendrucküberwachungseinheiten kommuniziert und
die Zentraleinheit Zeiten auswählt, zu denen die Reifendrucküberwachungseinheiten Messungen mit ihrem wenigstens einen Beschleunigungssensor vornehmen sollen, und dann diese Zeiten einigen oder allen Reifendrucküberwachungseinheiten mitteilt und Messergebnisse für diese Zeiten anfordert.

2. Verfahren nach Anspruch 1, **dadurch gekennzeichnet, dass** die Zentraleinheit die Zeiten, zu denen die Reifendrucküberwachungseinheiten Messungen mit ihrem wenigstens einen Beschleunigungssensor vornehmen sollen, in Abhängigkeit von Fahrzuständen des Fahrzeugs auswählt.

3. Verfahren nach Anspruch 2, **dadurch gekennzeichnet, dass** zumindest einer der Fahrzustände, in denen die Zentraleinheit die Reifendrucküberwachungseinheiten zu Messungen mit ihrem wenigstens einen Beschleunigungssensor veranlasst, einer der nachstehenden Fahrzustände ist:
- Kurvenfahrt,
- Beschleunigung des Fahrzeugs, die einen vorgegebenen Schwellenwert übersteigt,
- Bremsvorgang des Fahrzeugs.

4. Verfahren nach einem der vorstehenden Ansprüche, **dadurch gekennzeichnet, dass** die Zentraleinheit bei einer Kurvenfahrt einige oder alle Reifendrucküberwachungseinheiten des Fahrzeugs veranlasst, Messungen mit ihrem wenigstens einen Beschleunigungssensor vorzunehmen und anhand der Messergebnisse Reifendrucküberwachungseinheiten, die an gelenkten Rädern montiert sind, von Reifendrucküberwachungseinheiten unterscheidet, die an ungelenkten Rädern montiert sind.

5. Verfahren nach einem der vorstehenden Ansprüche, **dadurch gekennzeichnet, dass** die Zentraleinheit bei einer Beschleunigung des Fahrzeugs, die einen vorgegebenen Schwellenwert übersteigt, oder einem Bremsvorgang des Fahrzeugs einige oder alle Reifendrucküberwachungseinheiten des Fahrzeugs veranlasst, Messungen mit ihrem wenigstens einen Beschleunigungssensor vorzunehmen und anhand der Messergebnisse Reifendrucküberwachungseinheiten, die an einem angetrieben Rad montiert sind, von Reifendrucküberwachungseinheiten unterscheidet, die an nicht-angetriebenen Rädern montiert sind.

6. Verfahren nach einem der vorstehenden Ansprüche, **dadurch gekennzeichnet, dass** die Zentraleinheit ein Zeitintervall definiert und mehreren oder allen Reifendrucküberwachungseinheiten des Fahrzeugs Anfang und Ende dieses Zeitintervalls mitteilt und die Reifendrucküberwachungseinheiten anweist, während dieses Zeitintervalls Messungen mit ihrem wenigstens einen Beschleunigungssensor vorzunehmen, aus denen sich die Anzahl der Radumdrehungen in diesem Zeitintervall ermitteln lässt, und
die Zentraleinheit die für dieses Zeitintervall aus Messungen von Reifendrucküberwachungseinheiten jeweils ermittelte Anzahl von Radumdrehungen mit der Anzahl von Radumdrehungen vergleicht, die jeweils aus Informationen eines ABS-Sensors des Fahrzeugs gewonnenen wurde.

7. Verfahren nach einem der vorstehenden Ansprüche, **dadurch gekennzeichnet, dass** die Zentraleinheit den einzelnen Reifendrucküberwachungseinheiten unterschiedliche Zeiten vorgibt, zu denen Messergebnisses ihrer Beschleunigungssensoren zu senden sind.

8. Verfahren nach einem der vorstehenden Ansprüche, **dadurch gekennzeichnet, dass** die Zentraleinheit von einem Motorsteuergerät des Fahrzeugs über aktuelle Fahrzustände informiert wird.

## Claims

1. Method for associating tyre pressure monitoring units of a tyre pressure monitoring system of a vehicle to the various positions at which a wheel is mounted on the vehicle, wherein
the tyre pressure monitoring units each comprise a pressure sensor, at least one acceleration sensor and a transmitter,
the transmitter transmits data obtained during operation from measurements of the pressure sensor and the at least one acceleration sensor together with a characteristic identifier of the tyre pressure monitoring unit,
the tyre pressure monitoring system contains a central unit which receives transmissions from the tyre pressure monitoring units and, by evaluating the data contained therein, assigns each of the characteristic identifiers of the various tyre pressure monitoring units to one of the positions at which a wheel is mounted on the vehicle, **characterised in that**
the central unit communicates with the tyre pressure monitoring units via Bluetooth and
the central unit selects times at which the tyre pressure monitoring units are to take measurements with their at least one acceleration sensor and then communicates these times to some or all of the tyre pressure monitoring units and requests measurement results for these times.

2. Method according to claim 1, **characterised in that** the central unit selects the times at which the tyre pressure monitoring units are to take measurements with their at least one acceleration sensor as a function of driving conditions of the vehicle.

3. Method according to claim 2, **characterised in that** at least one of the driving states, in which the central unit causes the tyre pressure monitoring units to take measurements with their at least one acceleration sensor, is one of the following driving states:
- Cornering,
- Acceleration of the vehicle that exceeds a specified threshold value,
- Braking process of the vehicle.

4. Method according to any one of the preceding claims, **characterised in that**, when cornering, the central unit causes some or all tyre pressure monitoring units of the vehicle to take measurements with their at least one acceleration sensor and uses the measurement results to distinguish tyre pressure monitoring units which are mounted on steered wheels from tyre pressure monitoring units which are mounted on unsteered wheels.

5. Method according to any one of the preceding claims, **characterised in that** the central unit causes some or all tyre pressure monitoring units of the vehicle to take measurements with their at least one acceleration sensor in the event of acceleration of the vehicle exceeding a predetermined threshold value or braking of the vehicle, and uses the measurement results to distinguish tyre pressure monitoring units mounted on a driven wheel from tyre pressure monitoring units mounted on non-driven wheels.

6. Method according to any one of the preceding claims, **characterised in that** the central unit defines a time interval and communicates the beginning and end of this time interval to several or all tyre pressure monitoring units of the vehicle and instructs the tyre pressure monitoring units to take measurements with their at least one acceleration sensor during this time interval, from which measurements the number of wheel rotations in this time interval can be determined, and
the central unit compares the number of wheel rotations determined for this time interval from measurements of tyre pressure monitoring units with the number of wheel rotations obtained from information from an ABS sensor of the vehicle.

7. Method according to any one of the preceding claims, **characterised in that** the central unit specifies to the individual tyre pressure monitoring units different times at which the measurement results of their acceleration sensors are to be transmitted.

8. Method according to any one of the preceding claims, **characterised in that** the central unit is informed of current driving conditions by an engine control unit of the vehicle.

## Revendications

1. Procédé d'attribution d'unités de surveillance de pression de pneu d'un système de surveillance de pression de pneu d'un véhicule aux différentes positions auxquelles une roue respective est montée sur le véhicule, dans lequel
les unités de surveillance de pression de pneu contiennent chacune un capteur de pression, au moins un capteur d'accélération et un émetteur,
l'émetteur émet des données obtenues pendant le fonctionnement à partir des mesures du capteur de pression et d'au moins un capteur d'accélération, ainsi qu'un identificateur caractéristique de l'unité de surveillance de pression de pneu, le système de surveillance de pression de pneu contient une unité centrale qui reçoit les émissions des unités de surveillance de pression de pneu et, en évaluant les données qu'elles contiennent, attribue les identificateurs caractéristiques des différentes unités de surveillance de pression de pneu dans chaque cas à l'une des positions dans auxquelles une roue respective est montée sur le véhicule, **caractérisé en ce que**
l'unité centrale communique avec les unités de surveillance de pression de pneu via Bluetooth et
l'unité centrale sélectionne les moments où les unités de surveillance de pression de pneu doivent prendre des mesures avec leur au moins un capteur d'accélération, puis communique ces moments à tout ou partie des unités de surveillance de pression de pneu et demande les résultats des mesures pour ces moments.

2. Procédé selon la revendication 1, **caractérisé en ce que** l'unité centrale sélectionne les moments auxquels les unités de surveillance de pression de pneu doivent prendre des mesures avec leur au moins un capteur d'accélération en fonction des états de conduite du véhicule.

3. Procédé selon la revendication 2, **caractérisé en ce qu'**au moins un des états de conduite dans lesquels l'unité centrale demande aux unités de surveillance de pression de pneu de prendre des mesures à l'aide d'au moins un capteur d'accélération est l'un des états de conduite suivants :
- En virage,
- Accélération du véhicule dépassant une valeur seuil prédéterminée,
- Action de freinage du véhicule.

4. Procédé selon l'une des revendications précédentes, **caractérisé en ce que**, dans les virages, l'unité centrale demande à certaines ou à toutes les unités de surveillance de pression de pneu du véhicule d'effectuer des mesures avec leur au moins un capteur d'accélération et utilise les résultats des mesures pour distinguer les unités de surveillance de pression de pneu montées sur des roues directrices des unités de surveillance de pression de pneu montées sur des roues non directrices.

5. Procédé selon l'une des revendications précédentes, **caractérisé en ce que**, en cas d'accélération du véhicule dépassant une valeur seuil prédéterminée ou de freinage du véhicule, l'unité centrale demande à certaines ou à toutes les unités de surveillance de pression de pneu du véhicule de prendre des mesures avec leur au moins un capteur d'accélération et utilise les résultats des mesures pour distinguer les unités de surveillance de pression de pneu montées sur une roue motrice des unités de surveillance de pression de pneu montées sur des roues non motrices.

6. Procédé selon l'une des revendications précédentes, **caractérisé en ce que** l'unité centrale définit un intervalle de temps et communique le début et la fin de cet intervalle de temps à plusieurs ou à toutes les unités de surveillance de pression de pneu du véhicule et ordonne aux unités de surveillance de pression de pneu d'effectuer des mesures avec leur au moins un capteur d'accélération pendant cet intervalle de temps, mesures à partir desquelles le nombre des rotations de roue dans cet intervalle de temps peut être calculé, et
l'unité centrale compare le nombre des rotations de roue calculé respectivement pour cet intervalle de temps à partir des mesures des unités de surveillance de pression de pneu avec le nombre des rotations de roue obtenu respectivement à partir des informations provenant d'un capteur ABS du véhicule.

7. Procédé selon l'une des revendications précédentes, **caractérisé en ce que** l'unité centrale spécifie aux différentes unités de surveillance de pression de pneu différents moments auxquels les résultats des mesures de leurs capteurs d'accélération doivent être émis.

8. Procédé selon l'une des revendications précédentes, **caractérisé en ce que** l'unité centrale est informée des états de conduite actuelles par une unité de contrôle de moteur du véhicule.
